# FASCICULE DE BREVET EUROPEEN

(11) **EP 0 826 703 B1**
(45) Date de publication et mention de la délivrance du brevet: **04.12.2002**
(21) Numéro de dépôt: 97401951.5
(22) Date de dépôt: 19.08.1997
(51) Int. Cl.: C08F 14/06, C08F 259/04, C08L 27/06

(54) **Latex à deux populations de particules à base polymères de chlorure de vinyle, ses procédés d'obtention et son application dans des plastisols**
Latex mit zwei Korngrössen aus Vinylchloridpolymeren, Verfahren zu ihrer Herstellung und ihre Verwendung in Plastisols
Latex with two-particle size populations of vinylchloride polymers, manufacturing method thereof and use in plastisols

(30) Priorité: 27.08.1996 FR 9610493
(43) Date de publication de la demande: 04.03.1998
(73) Titulaire: Atofina, 92800 Puteaux (FR)
(72) Inventeur: Espiard, Philippe, 60140 Liancourt (FR); Peres, Richard, 04600 Saint Auban sur Durance (FR); Ernst, Benoît, 27170 Beaumont-le-Rocher (FR)

(56) Documents cités:
- EP-A- 0 025 561
- EP-A- 0 270 436
- FR-A- 1 318 956
- FR-A- 2 286 152
- FR-A- 2 309 569
- FR-A- 2 344 579
- US-A- 5 151 476

## Description

La présente invention concerne un latex contenant deux populations de particules de polymères à base de chlorure de vinyle. Elle a également pour objet, les procédés d'obtention de ce latex ainsi que son utilisation dans la fabrication des plastisols fluides et stables au stockage.

On connaît des latex bipopulés de particules de polymères à base de chlorure de vinyle, présentant respectivement des diamètres moyens compris entre 0,4 et 2,5 µm et entre 0,08 et 1 µm, dans un rapport des diamètres compris entre 1 et 20 et un rapport pondéral compris entre 0,1 et 10. (FR 2 309 569). Dans les exemples qui illustrent l'invention, ces latex sont préparés par polymérisation en microsuspension ensemencée en présence d'un premier polymère d'ensemencement, dont les particules renferment au moins un initiateur organosoluble et le diamètre moyen desquelles est au plus égal à 0,48 µm.

Par ailleurs, un procédé d'obtention d'un latex de polymères à base de chlorure de vinyle, capable de donner des plastisols fluides et stables au stockage, est décrit dans le brevet JP-A-6 107 711. Ce procédé est caractérisé en ce que la polymérisation en microsuspension ensemencée, est effectuée en présence d'un agent tensio-actif particulier comme par exemple, le nonyl propenyl phenol (éthylène oxyde)₂₀.

Les plastisols comprenant des polymères à base de chlorure de vinyle, ayant une viscosité peu élevée et présentant une bonne stabilité au stockage, sont très recherchés. Ils trouvent de nombreuses applications dans le revêtement et dans la fabrication des objets moulés. Leur viscosité peu élevée, facilite leur mise en oeuvre et permet également d'augmenter la productivité lors de la transformation.

La demanderesse a maintenant découvert un latex, contenant deux populations de particules de polymères à base de chlorure de vinyle, présentant respectivement des diamètres moyens compris entre 1,2 et 2 µm et entre 0,15 et 0,30 µm, dans des proportions telles que le rapport pondéral de la population de diamètre moyen inférieur sur celle de diamètre moyen supérieur, est compris entre 0,1 et 0,3. La poudre résultant de l'atomisation de ce latex, suivi éventuellement d'un broyage, convient tout particulièrement à la fabrication des plastisols fluides et stables au stockage.

Par polymères à base de chlorure de vinyle, on entend les homo-et co-polymères, ces derniers contenant au moins 50 % en poids de chlorure de vinyle et au moins un monomère copolymérisable avec le chlorure de vinyle. Les monomères copolymérisables sont ceux généralement employés dans les techniques classiques de copolymérisation du chlorure de vinyle. On peut citer les esters vinyliques des acides mono- et poly-carboxyliques, tels que acétate, propionate, benzoate de vinyle ; les acides insaturés mono- et poly-carboxyliques, tels que acrylique, méthacrylique, maléique, fumarique, itaconique, ainsi que leurs esters aliphatiques, cyclo-aliphatiques, aromatiques, leurs amides, leurs nitriles ; les halogénures d'alkyle, de vinyle, de vinylidène ; les alkylvinyl éthers et les oléfines.

Les polymères à base de chlorure de vinyle préférés sont les homopolymères de chlorure de vinyle.

Le latex, selon la présente invention, peut être obtenu par polymérisation en microsuspension ensemencée du ou des monomère(s) correspondant(s) en présence d'un premier polymère d'ensemencement (P1), dont les particules renferment au moins un initiateur organosoluble, d'un deuxième polymère d'ensemencement (P2), dont les particules ont un diamètre moyen inférieur à celui des particules du premier polymère d'ensemencement (P1), d'eau, d'un émulsifiant anionique, d'un sel métallique soluble et d'un agent réducteur.

Ce procédé est caractérisé en ce que le diamètre moyen des particules du premier polymère d'ensemencement (P1) est compris entre 0,6 et 0,9 µm.

Le premier polymère d'ensemencement (P1), nécessaire à la polymérisation, peut être préparé selon les techniques classiques de polymérisation en microsuspension, comme celle décrite dans le brevet FR 2 309 569, mais la durée de dispersion du ou des monomères est inférieure à celle utilisée habituellement. Il est ensuite utilisé sous forme d'une dispersion aqueuse de ses particules.

Les initiateurs organosolubles, à mettre en oeuvre dans la préparation du premier polymère d'ensemencement (P1), sont représentés par les peroxydes organiques, tels que les peroxydes de lauroyle, de décanoyle, de caproyle, le diéthylperacétate de tertiobutyle, le percarbonate de diéthylhexyle, le peroxyde de diacétyle et le dicétyl peroxyde carbonate.

Avantageusement, les peroxydes de lauroyle sont choisis.

Dans le cas où l'on emploie plusieurs initiateurs organosolubles, on a avantage à les choisir de réactivité différente; les initiateurs les plus réactifs agissent principalement au cours de la préparation du polymère d'ensemencement, alors que les initiateurs les moins réactifs agissent surtout au cours de la polymérisation ensemencée.

Le deuxième polymère d'ensemencement (P2) se présente sous forme d'une dispersion aqueuse de ses particules, dont le diamètre moyen est de préférence compris entre 0,1 et 0,14 µm.

Cette dispersion de particules peut être obtenue par les techniques classiques de polymérisation en microsuspension ou en émulsion.

La préparation du deuxième polymère d'ensemencement (P2), lorsqu'elle est effectuée par polymérisation en microsuspension, est réalisée ainsi qu'il est décrit précédemment, mais l'homogénéisation est plus poussée.

La préparation du deuxième polymère d'ensemencement (P2) est de préférence effectuée par polymérisation en émulsion, qui consiste à mettre en oeuvre de l'eau, du chlorure de vinyle seul ou associé à un ou plusieurs monomère(s) copolymérisable(s), un initiateur hydrosoluble et un émulsifiant anionique éventuellement associé à un émulsifiant non ionique.

Le mélange réactionnel est chauffé sous pression autogène et agitation modérée à une température comprise entre 30 et 65° C. Après chute de pression, la réaction est arrêtée et le ou les monomères non transformés sont dégazés.

Les initiateurs hydrosolubles nécessaires à la préparation du deuxième polymère d'ensemencement (P2) sont généralement représentés par l'eau oxygénée, les persulfates de métaux alcalins ou d'ammonium associés ou non à des réducteurs hydrosolubles, tels que sulfites ou bisulfites de métaux alcalins. Les quantités utilisées, très variables, dépendent du système initiateur choisi et sont juste suffisantes pour assurer la polymérisation dans des temps raisonnables.

Les agents réducteurs peuvent être choisis parmi les acides alkylphosphoriques, les lactones, les cétones, les carbazones, les métabisulfites de métaux alcalins et les acides mono- ou polycarboxyliques tels que l'acide ascorbique et ses dérivés. La quantité d'agent réducteur utilisé est, de préférence, comprise entre 30 et 120 ppm par rapport au(x) monomère(s), mis en jeu. Avantageusement, l'acide ascorbique est choisi.

Dans le procédé selon la présente invention, la vitesse de polymérisation est accélérée par l'action du sel métallique hydrosoluble et de l'agent réducteur sur l'initiateur organosoluble. Le sel métallique est mis en oeuvre en quantité, telle que le rapport molaire sel métallique / initiateur est, de préférence, compris entre 0,001 et 0,1 et plus particulièrement entre 0,001 et 0,03. Le métal est, en général, choisi parmi le fer, le cuivre, le cobalt, le nickel, le zinc, l'étain, le titane, le vanadium, le manganèse, le chrome et l'argent. Le cuivre est avantageusement choisi.

La présence de l'émulsifiant anionique, éventuellement associé à au moins un émulsifiant non ionique, améliore la stabilité de la microsuspension. Le ou les émulsifiants peut ou peuvent être ajouté(s) dans le milieu réactionnel, avant et/ ou après et/ou en cours de polymérisation. Les émulsifiants anioniques sont, de préférence, choisis parmi les savons d'acides gras, les alkylsulfates, les alkylsulfates éthoxylés, les alkylsulfonates, les alkylarylsulfonates, les vinylsulfonates, les allylsulfonates, les alkyl sulfosuccinates, les alkylphosphates alcalins. Les émulsifiants non ioniques préférés, sont les polycondensats d'oxyde d'éthylène ou de propylène sur divers composés organiques hydroxylés.

La quantité totale d'émulsifiant mis en oeuvre est de préférence comprise entre 1 et 3 % en poids du ou des monomère(s), mis en jeu.

La quantité d'eau nécessaire à la polymérisation, selon l'invention, est telle que la concentration initiale en polymères d'ensemencement, plus le ou les monomère(s) mis en jeu, soit comprise entre 20 et 80 % et de préférence entre 45 et 75 % en poids par rapport au mélange réactionnel.

La température de polymérisation ensemencée est, en général, comprise entre 30 et 80° C et la durée de polymérisation est comprise entre 30 minutes et 12 heures et de préférence comprise entre 1 et 8 heures.

Un autre mode de préparation du latex, conforme à la présente invention, consiste à utiliser un premier polymère d'ensemencement (P1) dont les particules renferment au moins 2,5 % en poids d'un ou de plusieurs initiateur(s) organosoluble(s). Dans ce cas, le diamètre moyen des particules de polymère peut être inférieur à 0,6 µm.

En outre, la polymérisation ensemencée selon le premier ou second mode de préparation peut être effectuée en présence d'un ou de plusieurs initiateur(s) hydrosoluble(s), choisis parmi l'eau oxygénée et les persulfates de métaux alcalins ou d'ammonium. Le persulfate d'ammonium est avantageusement choisi.

Le ou les initiateur(s) hydrosoluble(s) est ou sont, de préférence, introduit(s) dans le milieu réactionnel avant le début de la polymérisation ensemencée. La quantité d'initiateur(s) hydrosoluble(s) utilisée est, de préférence, comprise entre 10 et 100 ppm par rapport au(x) monomère(s), mis en jeu.

Selon un troisième mode de préparation, le latex de la présente invention peut être obtenu en mélangeant un latex (L1) contenant une seule population de particules de polymères à base de chlorure de vinyle, dont le diamètre moyen est compris entre 1,2 et 2 µm avec un deuxième latex (L2), contenant également une seule population de particules de polymères à base de chlorure de vinyle, dont le diamètre moyen est compris entre 0,15 et 0,3 µm et dans des proportions telles que le rapport massique de polymères du latex (L2) sur ceux du latex (L1) est compris entre 0,1 et 0,3.

Le latex (L1) peut être obtenu par polymérisation en microsuspension ensemencée, selon les deux premiers modes décrits précédemment sauf que l'on opère en l'absence du deuxième polymère d'ensemencement (P2).

Le latex (L2) peut être obtenu par polymérisation en émulsion du chlorure de vinyle seul ou associé à un ou plusieurs monomère(s) copolymérisable(s), un initiateur hydrosoluble et un émulsifiant anionique éventuellement associé à un émulsifiant non ionique.

Selon les deux premiers modes de préparation, la quantité de deux polymères d'ensemencement utilisée est telle que le rapport massique du deuxième polymère d'ensemencement (P2) sur celui de (P1) est de préférence compris entre 0,5 et 2.

Quel que soit le mode de préparation utilisé, les latex ainsi préparés sont ensuite avantageusement séchés par atomisation pour donner des poudres, particulièrement aptes à la préparation des plastisols fluides et stables au stockage.

La température à l'entrée de l'atomiseur est de préférence comprise entre 150 et 240° C et celle à la sortie est de préférence comprise entre 50 et 90° C.

### Partie expérimentale

### (A) Préparation du polymère d'ensemencement (P1)

Dans un réacteur de 800 litres, agité à 35 tours/min et régulé à 15° C, on introduit successivement :
- 375 kg d'eau
- 5 l de la solution tampon contenant 426 g de dihydrogénophosphate de potassium et 117 g de soude pure
- 11 g de paraquinone en poudre
- 6 kg de peroxyde de lauroyle
- 320 kg de chlorure de vinyle
- 48 kg d'une solution aqueuse à 10 % en poids de dodécylbenzène sulfonate de sodium,
le réacteur étant mis sous vide juste avant l'introduction du chlorure de vinyle.

On réalise ensuite une fine dispersion du chlorure de vinyle dans le milieu aqueux à une température inférieure ou égale à 35° C, en agitant le dit milieu, pendant 105 minutes, à 5 500 tours/min.

Puis, on porte le milieu réactionnel à la température de polymérisation visée de 45° C sous pression autogène, la vitesse d'agitation étant de 30 tours/min. Au cours de la polymérisation, on introduit en continu la paraquinone avec un débit constant de 10,5 g/h.

Après la chute de pression jusqu'à la valeur de 3,5 bars, c'est-à-dire après 8 heures, on dégaze le chlorure de vinyle qui n'a pas réagi. On obtient ainsi un latex dont les particules ont un diamètre moyen d'environ 0,55 µm et renferment environ 1,8 % en poids par rapport au polymère, de peroxyde de lauroyle. La concentration du latex est de 39 %.

### (B) Préparation du polymère d'ensemencement (P1)

On opère comme décrit en (A) sauf que l'on utilise 11 kg de peroxyde de lauroyle. On obtient ainsi un latex dont les particules ont un diamètre moyen d'environ 0,57 µm et renferment environ 3 % en poids de peroxyde de lauroyle par rapport au polymère. La concentration du latex est de 34 %.

### (C) Préparation du polymère d'ensemencement (P1)

On opère comme décrit en (A) sauf que la durée de réalisation de la fine dispersion du chlorure de vinyle dans le milieu aqueux est de 40 minutes. On obtient un latex dont les particules ont un diamètre moyen d'environ 0,83 µm et renferment environ 2,1 % en poids de peroxyde de lauroyle par rapport au polymère. La concentration du latex est de 34 %.

### (D) Préparation du polymère d'ensemencement (P2)

Dans un réacteur de 800 litres muni d'un agitateur on introduit :
440 kg d'eau
44 g d'éthylène diamine tétracétique (EDTA)
10,5 g de sulfate de fer
98 g de formaldéhyde sulfoxylate de sodium
1,23 kg d'acide laurique et
750 g de soude à 50 %

Le réacteur est ensuite mis sous vide avant l'introduction de 350 kg de chlorure de vinyle. Puis on porte le milieu réactionnel à la température visée de 55° C. Dès que le milieu atteint 52° C, on introduit en continu une solution aqueuse contenant 200 g de persulfate de potassium pour 50 litres d'eau. Une heure après le début d'introduction de cette dernière, on ajoute en continu à débit constant pendant 4 heures, 50 litres de solution aqueuse contenant 3,85 kg de docécylbenzène sulfonate.

Lorsque la pression interne est de 4 bars, le réacteur est remis à l'air puis refroidi et le chlorure de vinyle non réagit est éliminé par dégazage. On obtient ainsi un latex dont les particules ont un diamètre moyen de 0,13 µm.

### (E) Préparation du polymère d'ensemencement (L2)

On opère comme décrit en (D) sauf que la quantité d'acide laurique utilisée est de 527 g. On obtient un latex dont les particules ont un diamètre moyen de 0,215 µm.

### (F) Préparation du polymère d'ensemencement (L2)

On opère comme décrit en (D) sauf que la quantité d'acide laurique utilisée, est de 280 g. On obtient un latex dont les particules ont un diamètre moyen de 0,316 µm.

### Exemple 1

Dans un réacteur de 800 litres, muni d'un agitateur et préalablement mis sous vide, on introduit successivement par aspiration :
- 400 kg d'eau déminéralisée
- 80 g de dihydrogénophosphate de potassium
- 3,1 g de sulfate de cuivre (CuSO₄. 5H₂O)
- 18 kg considéré à l'état sec du latex de polymère d'ensemencement (P1) préparé selon (A)
- 11,68 kg considéré à l'état sec du latex de polymère d'ensemencement (P2) préparé selon (D).

Le réacteur à température ambiante, sous agitation et contenant le mélange aqueux est de nouveau mis sous vide. On introduit alors 400 kg de chlorure de vinyle, puis on porte le milieu réactionnel à la température visée de 53° C. Dès que la température du milieu atteint 49° C, on introduit en continu une solution aqueuse d'acide ascorbique suivi une heure après, d'une solution aqueuse de dodécyl benzène sulfonate de sodium.

Lorsque la pression du milieu est de 4 bars, soit au bout de 5 heures de polymérisation, on arrête l'introduction des solutions aqueuses, le chauffage et on refroidit le réacteur.

La quantité totale d'acide ascorbique et de dodécylbenzène sulfonate de sodium introduite est de 26 g et 3,2 kg respectivement.

On obtient un latex dont la concentration en polymère est de 50 %. L'analyse granulométrique montre que le polymère est formé de deux populations dont les particules ont respectivement des diamètres moyens de 0,206 µm et 1,05 µm. Les particules fines représentent 14,8 % en poids du polymère.

### Exemple 2

On opère comme décrit à l'exemple 1 sauf que l'on utilise 8,4 kg considéré à l'état sec du latex de polymère d'ensemencement (P1) préparé selon (B) et 14 kg considéré à l'état sec du latex de polymère d'ensemencement (P2) préparé selon (D). La durée de polymérisation est de 7 heures et la quantité d'acide ascorbique introduite est de 42 g.

### Exemple 3

On opère comme décrit à l'exemple 2, sauf que l'on y ajoute 6 g de persulfate d'ammonium avant le début de polymérisation.

### Exemple 4

On opère comme décrit à l'exemple 3, sauf que l'on utilise 9 g de persulfate d'ammonium et 10 kg considéré à l'état sec du latex de polymère d'ensemencement (P2) préparé selon (D).

Les latex bipopulés ainsi obtenus, (Exemples 1 à 4) sont ensuite séchés dans un atomiseur NIRO, puis broyés. Les conditions d'atomisation et du broyage sont données ci-dessous :
Température d'entrée de l'atomiseur = 180° C
Température de sortie de l'atomiseur = 60° C
Débit d'alimentation du broyeur = 320 kg/h
Vitesse du broyeur = 4800 tours/min
Vitesse du sélecteur = 3000 tours/min

100 parties de la poudre résultante sont ensuite mélangées avec 40 parties en poids du phtalate de dioctyle pour donner un plastisol, dont les caractéristiques rhéologiques, mesurées à l'aide d'un rhéomètre rotationnel type Brookfield RTV (aiguilles no 6, 20 tours/min, mesure et conditionnement à 25° C) et d'un rhéomètre à extrusion type Severs (conditionnement 2 h à 25° C), sont consignées dans le Tableau 1.

La stabilité au stockage des plastisols obtenus à partir des poudres résultant de l'atomisation des latex préparés selon les exemples 1 à 4 est reportée dans le Tableau 2. Dans le cas, des plastisols stabilisés aux sels de barium et de zinc, la formulation utilisée est la suivante : 100 parties en poids de poudre, 40 parties de dioctyl phtalate, 5 parties d'un coplastifiant Texamol TX1B, 30 parties de l'huile de soja epoxydé et 2 parties d'Ackros LXBZ 112.

La formulation des plastisols stabilisés aux sels d'étain est la suivante : 100 parties en poids de poudre, 40 parties d'un plastifiant SANTIZER S 213, 5 parties de Texamol TX1B et 1,5 parties de 5 MTX 262 GV de CIBA.

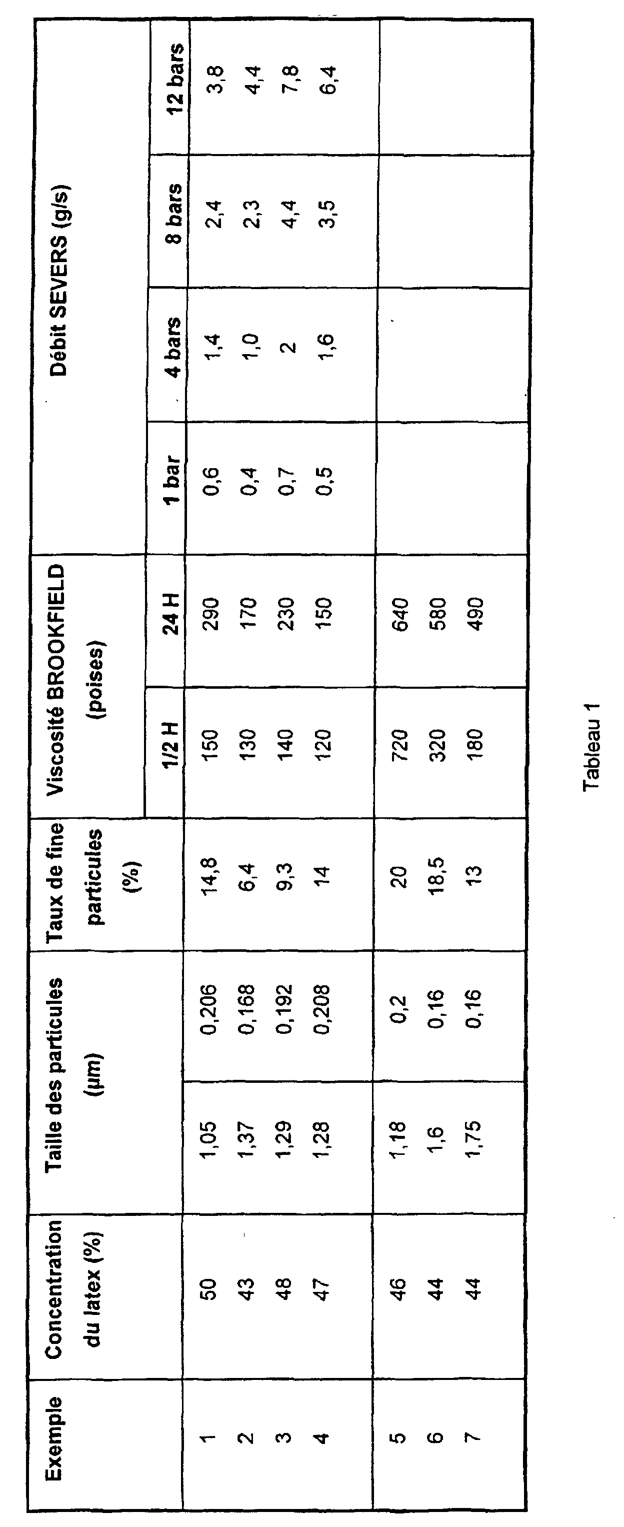

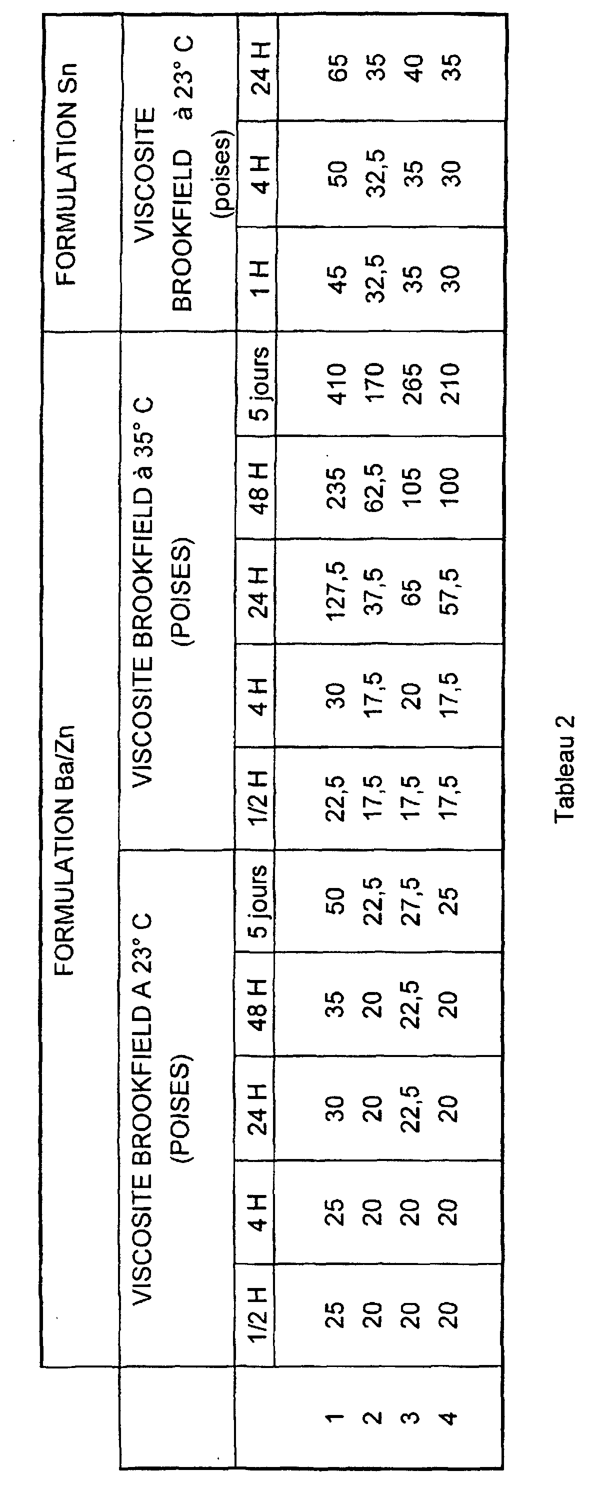

### Exemple 5

Dans un réacteur de 28 litres, muni d'un agitateur et préalablement mis sous vide, on introduit successivement par aspiration :
- 10 kg d'eau déminéralisée
- 1,5 g de dihydrogénophosphate de potassium
- 56 mg de sulfate de cuivre (CuSO₄. 5H₂O)
- 315 g considéré à l'état sec du latex de polymère d'ensemencement (P1) préparé selon (A).
- 204 g considéré à l'état sec du latex de polymère d'ensemencement (P2) préparé selon (D).

Le réacteur à température ambiante, sous agitation et contenant le mélange aqueux est de nouveau mis sous vide. On introduit alors 7,5 kg de chlorure de vinyle, puis on porte le milieu réactionnel à la température visée de 53° C. Dès que la température du milieu atteint 49° C, on introduit en continu une solution aqueuse d'acide ascorbique suivi une heure après, d'une solution aqueuse de dodécyl benzène sulfonate de sodium.

Lorsque la pression du milieu est de 4 bars, soit au bout de 5 heures de polymérisation, on arrête l'introduction des solutions aqueuses, le chauffage et on refroidit le réacteur.

La quantité totale d'acide ascorbique et de dodécylbenzène sulfonate de sodium introduite est de 0,8 g et 60 g respectivement.

On obtient un latex dont la concentration en polymère est de 46 %. L'analyse granulométrique montre que le polymère est formé de deux populations dont les particules ont respectivement des diamètres moyens de 0,2 µm et 1,18 µm. Les particules fines représentent 20 % en poids du polymère.

### Exemple 6

Dans un réacteur de 28 litres, agité à 80 tours/min et régulé à 25° C, on introduit successivement :
- 10 kg d'eau déminéralisée
- 1,5 g de dihydrogénophosphate de potassium
- 56 mg de sulfate de cuivre (CuSO₄. 5 H₂O)
- 225 g considéré à l'état sec du latex de polymère d'ensemencement (P1) préparé selon (C)
- 270 g considéré à l'état sec du latex de polymère d'ensemencement (P2) préparé selon (D).

Le réacteur contenant le mélange aqueux est de nouveau mis sous vide. On introduit alors 7,5 kg de chlorure de vinyle, puis on porte le milieu réactionnel à la température visée de 54° C. Dès que la température du milieu atteint 49° C, on introduit en continu une solution aqueuse d'acide ascorbique de concentration 0,75 g/l, suivi une heure et demie après, d'une solution aqueuse de dodécylbenzène sulfonate de sodium.

Lorsque la chute de la pression du milieu est de 1 bar, on arrête l'introduction des solutions aqueuses et on remet le réacteur à pression atmosphérique. Puis on arrête le chauffage et on refroidit rapidement le réacteur.

La quantité totale d'acide ascorbique et de dodécylbenzène sulfonate de sodium introduite est de 0,39 g et 112 g respectivement.

### Exemple 7

On opère comme décrit à l'exemple 6, sauf que l'on utilise 277,5 g considéré à l'état sec du latex de polymère d'ensemencement (P2) préparé selon (D).

Les latex obtenus selon les exemples 5 à 7, sont ensuite séchés dans un atomiseur (température d'entrée = 180° C ; sortie = 70° C), puis les résines séchées sont broyées. A l'issu du broyage, 100 parties de la poudre résultante sont mélangées à 40 parties du dioctylphtalate pour donner un plastisol dont les propriétés rhéologiques sont reportées dans le Tableau 1.

### Exemple 8

### Préparation du latex (L1)

Dans un réacteur de 28 litres, muni d'un agitateur et préalablement mis sous vide, on introduit successivement par aspiration :
9 500 g d'eau déminéralisée
1,4 g de dihydrogénophosphate de potassium dissous dans 20 ml d'eau.
52,3 mg de CuSO₄.5H₂O dissous dans 20 ml d'eau et 600 g du polymère d'ensemencement (P1) préparé selon (C).

Le réacteur à température ambiante, sous agitation et contenant le mélange aqueux est de nouveau mis sous vide. On introduit ensuite 7 000 g de chlorure de vinyle et puis on chauffe le mélange à la température visée de 53° C. Dès que la température du milieu réactionnel atteint 49° C, on introduit en continu un litre d'une solution aqueuse contenant 0,7 g d'acide ascorbique puis une heure après on introduit en continu un litre d'une solution aqueuse contenant 56 g de docécylbenzène sulfonate et 175 mg de soude. Lorsque la pression du milieu atteint 4 bars soit après 8 heures de polymérisation, on arrête l'introduction de solution aqueuse. Le réacteur est alors mis sous pression atmosphérique et puis soumis à un refroidissement rapide.

La concentration du polymère dans le milieu aqueux est de 41 % et le diamètre moyen des particules est de 1,2 µm. Le taux de transformation du chlorure de vinyle est de 97 %.

### Préparation du mélange

On prélève ensuite une partie du latex (L1) ainsi préparé et on le mélange avec une partie du latex (L2), préparé selon (E), dans des proportions telles que le rapport massique du polymère de latex (L2) sur celui du latex (L1) est égal à 0,25.

### Exemple 9

On opère comme décrit à l'exemple 8 sauf que l'on utilise 525 g du polymère d'ensemencement (P1) préparé selon (C). La quantité totale de dodécylbenzène sulfonate introduite est de 70 g.

Le latex (L1) ainsi préparé, est constitué de particules de polymère dont le diamètre moyen est de 1,26 µm.

### Exemple 10

On opère comme décrit à l'exemple 8 sauf que l'on utilise 450 g de polymère d'ensemencement (P1) préparé selon (C). La quantité totale de docécylbenzène sulfonate introduite est de 85 g.

Le latex (L1) ainsi préparé, est constitué de particules de polymère dont le diamètre moyen est de 1,35 µm.

### Exemple 11

On opère comme décrit à l'exemple 8 sauf que l'on utilise 375 g de polymère d'ensemencement (P1) préparé selon (C). La quantité totale de dodécylbenzène sulfonate introduite est de 100 g.

Le latex (L1) ainsi préparé est constitué de particules de polymère dont le diamètre moyen est de 1,46 µm.

### Exemple 12

On opère comme décrit à l'exemple 10 sauf que le latex (L2) utilisé pour le mélange, est préparé selon (F).

### Exemple 13

On opère comme décrit à l'exemple 10 sauf que le mélange est préparé dans des proportions telles que le rapport massique du polymère de latex (L2) sur celui du latex (L1) est égal à 0,11.

### Préparation des plastisols

Les latex bipopulés obtenus par mélange (exemples 8 à 13) sont atomisés en utilisant une température d'entrée de l'atomiseur de 180° C et une température de sortie de 70° C. A l'issue de cette étape, la résine est ensuite broyée, puis 100 parties de la poudre résultante sont mélangées à 40 parties de dioctylphtalate pour donner un plastisol dont les propriétés rhéologiques sont reportées au Tableau 3. Les mesures ont été prises dans les mêmes conditions que celles des plastisols du Tableau 1.

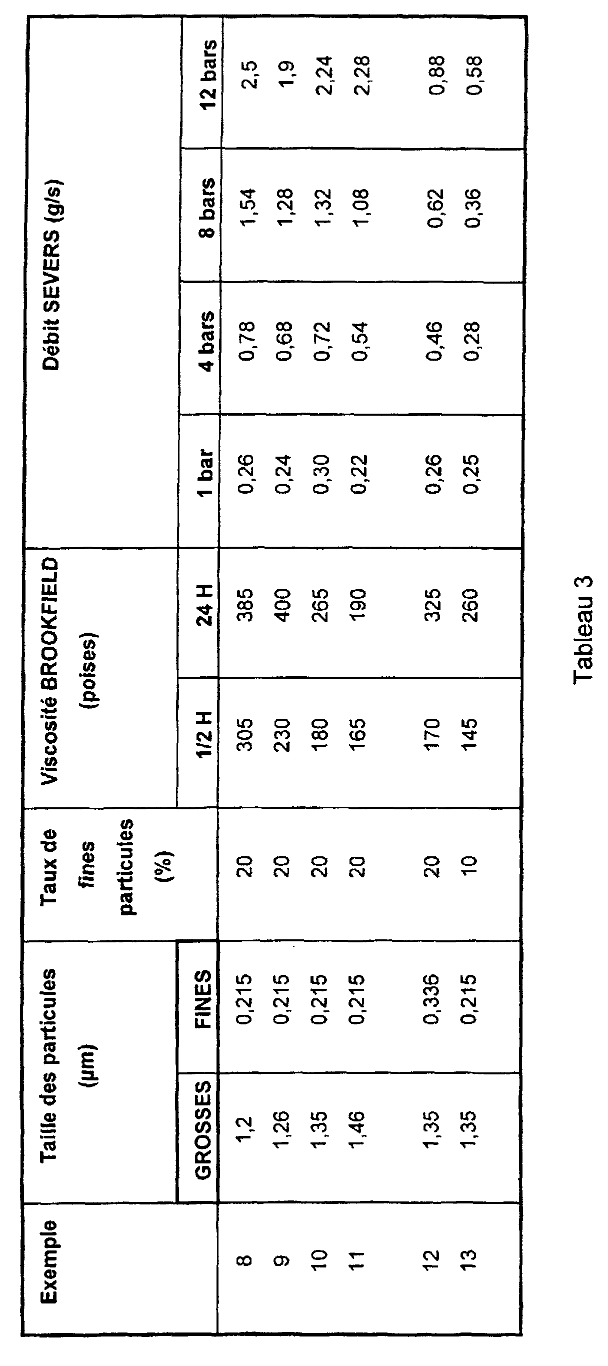

## Revendications

1. Procédé d'obtention d'un latex contenant deux populations de particules d'homo- ou co-polymère du chlorure de vinyle, qui consiste à polymériser en microsuspension le ou les monomère(s) correspondant(s) en présence d'un premier polymère d'ensemencement (P1), dont les particules renferment au moins un initiateur organosoluble, d'un deuxième polymère d'ensemencement (P2), dont les particules ont un diamètre moyen inférieur à celui des particules du premier polymère d'ensemencement (P1), d'eau, d'un émulsifiant anionique, d'un sel métallique soluble et d'un agent réducteur, est **caractérisé en ce que** le diamètre moyen des particules du premier polymère d'ensemencement est compris entre 0,6 et 0,9 µm.

2. Procédé d'obtention d'un latex contenant deux populations de particules d'homo- ou co-polymère du chlorure de vinyle, qui consiste à polymériser en microsuspension le ou les monomère(s) correspondant(s) en présence d'un premier polymère d'ensemencement (P1), dont les particules renferment au moins un initiateur organosoluble, d'un deuxième polymère d'ensemencement (P2), dont les particules ont un diamètre moyen inférieur à celui des particules du premier polymère d'ensemencement (P1), d'eau, d'un émulsifiant anionique, d'un sel métallique soluble et d'un agent réducteur, est **caractérisé en ce que** le ou les initiateur(s) organosoluble(s) représente(nt) au moins 2,5 % en poids par rapport aux particules du premier polymère d'ensemencement (P1).

3. Procédé d'obtention d'un latex selon la revendication 1 ou 2, **caractérisé en ce que** l'on opère en présence d'au moins un initiateur hydrosoluble.

4. Procédé selon la revendication 3 **caractérisé en ce que** l'initiateur hydrosoluble est le persulfate d'ammonium.

5. Procédé selon la revendication 3 ou 4 **caractérisé en ce que** la quantité d'initiateur hydrosoluble introduite, est comprise entre 10 et 100 ppm par rapport au poids du ou des monomère(s) mis en jeu.

6. Procédé selon l'une quelconque des revendications 1 à 5 **caractérisé en ce que** le rapport pondéral du deuxième polymère d'ensemencement sur le premier polymère d'ensemencement est compris entre 0,5 et 2.

7. Procédé d'obtention d'un latex contenant deux populations de particules d'homo- ou co-polymère du chlorure de vinyle, **caractérisé en ce que** l'on mélange un latex (L1) monopopulé de particules de polymères à base de chlorure de vinyle, de diamètre moyen compris entre 1,2 et 2 µm, obtenu par la polymérisation en microsuspension ensemencée, en présence d'un polymère d'ensemencement (P1) dont les particules de diamètre moyen compris entre 0,6 et 0,9 µm, renferment au moins un initiateur organosoluble , avec un latex (L2) monopopulé de particules de polymères à base de chlorure de vinyle, dont le diamètre moyen est compris entre 0,15 et 0,3 µm, dans les proportions telles que le rapport massique des polymères du latex (L2) sur ceux de (L1) est compris entre0,1 et 0,3.

8. Procédé d'obtention d'un latex contenant deux populations de particules d'homo- ou co-polymère du chlorure de vinyle, **caractérisé en ce que** l'on mélange un latex (L1) monopopulé de particules de polymères à base de chlorure de vinyle, de diamètre moyen compris entre 1,2 et 2 µm, obtenu par la polymérisation en microsuspension ensemencée, en présence d'un polymère d'ensemencement (P1) dont les particules renferment au moins 2,5% en poids d'au moins un initiateur organsoluble, avec un latex (L2) monopopulé de particules de polymères à base de chlorure de vinyle, dont le diamètre moyen est compris entre 0,15 et 0,3 µm, dans les proportions telles que le rapport massique des polymères du latex (L2) sur ceux de (L1) est compris entre 0,1 et 0,3.

9. Procédé selon la revendication 7 ou 8 **caractérisé en ce que** l'on opère en présence d'un initiateur hydrosoluble.

## Claims

1. Process for producing a latex containing two populations of particles of homo- or copolymer of vinyl chloride, which consists in polymerizing, under microsuspension conditions, the corresponding monomer or monomers in the presence of a first seeding polymer (P1), the particles of which contain at least one organosoluble initiator, of a second seeding polymer (P2), the particles of which have a mean diameter less than that of the particles of the first seeding polymer (P1), of water, of an anionic emulsifier, of a soluble metal salt and of a reducing agent, **characterized in that** the mean diameter of the particles of the first seeding polymer is between 0.6 and 0.9 µm.

2. Process for producing a latex containing two populations of particles of homo- or copolymer of vinyl chloride, which consists in polymerizing, under microsuspension conditions, the corresponding monomer or monomers in the presence of a first seeding polymer (P1), the particles of which contain at least one organosoluble initiator, of a second seeding polymer (P2), the particles of which have a mean diameter less than that of the particles of the first seeding polymer (P1), of water, of an anionic emulsifier, of a soluble metal salt and of a reducing agent, **characterized in that** the organosoluble initiator or initiators represent(s) at least 2.5% by weight with respect to the particles of the first seeding polymer (P1).

3. Process for producing a latex according to Claim 1 or 2, **characterized in that** the reaction is carried out in the presence of at least one water-soluble initiator.

4. Process according to Claim 3, **characterized in that** the water-soluble initiator is ammonium persulphate.

5. Process according to Claim 3 or 4, **characterized in that** the amount of water-soluble initiator introduced is between 10 and 100 ppm with respect to the weight of the monomer or monomers involved.

6. Process according to any one of Claims 1 to 5, **characterized in that** the ratio by weight of the second seeding polymer to the first seeding polymer is between 0.5 and 2.

7. Process for producing a latex containing two populations of particles of homo- or copolymer of vinyl chloride, **characterized in that** a latex (L1) monopopulated with particles of polymers based on vinyl chloride, with a mean diameter of between 1.2 and 2 µm, obtained by polymerization under seeded microsuspension conditions, is mixed, in the presence of a seeding polymer (P1), the particles of which, with a mean diameter of between 0.6 and 0.9 µm, contain at least one organosoluble initiator, with a latex (L2) monopopulated with particles of polymers based on vinyl chloride, the mean diameter of which is between 0.15 and 0.3 µm, in proportions such that the ratio by mass of the polymers of the latex (L2) to those of (L1) is between 0.1 and 0.3.

8. Process for producing a latex containing two populations of particles of homo- or copolymer of vinyl chloride, **characterized in that** a latex (L1) monopopulated with particles of polymers based on vinyl chloride, with a mean diameter of between 1.2 and 2 µm, obtained by polymerization under seeded microsuspension conditions, is mixed, in the presence of a seeding polymer (P1), the particles of which contain at least 2.5% by weight of at least one organosoluble initiator, with a latex (L2) monopopulated with particles of polymers based on vinyl chloride, the mean diameter of which is between 0.15 and 0.3 µm, in proportions such that the ratio by mass of the polymers of the latex (L2) to those of (L1) is between 0.1 and 0.3.

9. Process according to Claim 7 or 8, **characterized in that** the reaction is carried out in the presence of a water-soluble initiator.

## Patentansprüche

1. Verfahren zur Herstellung eines Latex, der zwei Partikelverteilungen eines Homo- oder Copolymers des Vinylchlorid enthält, das darin besteht, in Mikrosuspension das entsprechende Monomer oder die entsprechenden Monomere in Gegenwart eines ersten Impfpolymers (P1), dessen Partikel mindestens einen in organischen Medien löslichen Initiator enthalten, eines zweiten Impfpolymers (P2), dessen Partikel einen mittleren Durchmesser aufweisen, der unter dem Durchmesser der Partikel des ersten Impfpolymers (P1) liegt, von Wasser, eines anionischen Emulgators, eines löslichen Metallsalzes und eines Reduktionsmittels zu polymerisieren, **dadurch gekennzeichnet, daß** der mittlere Durchmesser der Partikel des ersten Impfpolymers im Bereich von 0,6 bis 0,9 µm liegt.

2. Verfahren zur Herstellung eines Latex, der zwei Partikelverteilungen eines Homo- oder Copolymers des Vinylchlorid enthält, das darin besteht, in Mikrosuspension das entsprechende Monomer oder die entsprechenden Monomere in Gegenwart eines ersten Impfpolymers (P1), dessen Partikel mindestens einen in organischen Medien löslichen Initiator enthalten, eines zweiten Impfpolymers (P2), dessen Partikel einen mittleren Durchmesser aufweisen, der unter dem Durchmesser der Partikel des ersten Impfpolymers (P1) liegt, von Wasser, eines anionischen Emulgators, eines löslichen Metallsalzes und eines Reduktionsmittels zu polymerisieren, **dadurch gekennzeichnet, daß** der in organischen Medium lösliche Initiator oder die in organischen Medien löslichen Initiatoren mindestens 2,5 Gew.-%, bezogen auf die Partikel des ersten Impfpolymers (P1), ausmachen.

3. Verfahren zur Herstellung eines Latex nach Anspruch 1 oder 2, **dadurch gekennzeichnet, daß** in Gegenwart mindestens eines wasserlöslichen Initiators gearbeitet wird.

4. Verfahren nach Anspruch 3, **dadurch gekennzeichnet, daß** der wasserlösliche Initiator das Ammoniumpersulfat ist.

5. Verfahren nach Anspruch 3 oder 4, **dadurch gekennzeichnet, daß** der wasserlösliche Initiator in einer Menge im Bereich von 10 bis 100 ppm, bezogen auf das Gewicht des verwendeten Monomers oder der verwendeten Monomere, zugeführt wird.

6. Verfahren nach einem der Ansprüche 1 bis 5, **dadurch gekennzeichnet, daß** das Gewichtsverhältnis des zweiten Impfpolymers und des ersten Impfpolymers im Bereich von 0,5 bis 2 liegt.

7. Verfahren zur Herstellung eines Latex, der zwei Verteilungen von Partikeln eines Homo- oder Copolymers des Vinylchlorid enthält, **dadurch gekennzeichnet, daß** ein Latex (L1) mit einer Verteilung von Polymerpartikeln auf der Basis des Vinylchlorid mit einem mittleren Durchmesser im Bereich von 1,2 bis 2 µm, der durch Polymerisation in angeimpfter Mikroemulsion in Gegenwart eines Impfpolymers (P1), dessen Partikel einen mittleren Durchmesser im Bereich von 0,6 bis 0,9 µm aufweisen und der mindestens einen in organischen Medien löslichen Initiator enthält, hergestellt ist, mit einem Latex (L2) mit einer Verteilung von Polymerpartikeln auf der Basis des Vinylchlorid, deren mittlerer Durchmesser im Bereich von 0,15 bis 0,3 µm liegt, in solchen Mengenanteilen vermischt wird, daß das Masseverhältnis der Polymere von Latex (L2) und der Polymere von Latex (L1) im Bereich von 0,1 bis 0,3 liegt.

8. Verfahren zur Herstellung eines Latex, der zwei Partikelverteilungen eines Homo- oder Copolymers des Vinylchlorid enthält, **dadurch gekennzeichnet, daß** ein Latex (L1) mit einer Verteilung von Polymerpartikeln auf der Basis des Vinylchlorid mit einem mittleren Durchmesser von 1,2 bis 2 µm, der durch Polymerisation in angeimpfter Mikroemulsion in Gegenwart eines Impfpolymers (P1), dessen Partikel mindestens 2,5 Gew.-% mindestens eines in organischen Medien löslichen Initiators enthalten, hergestellt ist, mit einem Latex (L2) mit einer Verteilung von Polymerpartikeln auf der Basis des Vinylchlorid, deren mittlerer Durchmesser im Bereich von 0,15 bis 0,3 µm liegt, in solchen Mengenanteilen vermischt wird, daß das Masseverhältnis der Polymere des Latex (L2) und der Polymere des Latex (L1) im Bereich von 0,1 bis 0,3 liegt.

9. Verfahren nach Anspruch 7 oder 8, **dadurch gekennzeichnet, daß** in Gegenwart eines wasserlöslichen Initiators gearbeitet wird.
